# EUROPÄISCHE PATENTSCHRIFT

(11) **EP 3 009 738 B1**
(45) Veröffentlichungstag und Bekanntmachung des Hinweises auf die Patenterteilung: **05.12.2018**
(21) Anmeldenummer: 15188196.8
(22) Anmeldetag: 02.10.2015
(51) Int. Cl.: F21V 21/04, F21V 21/088, F16M 13/02

(54) **KLEMMHALTERUNG**
CLAMP MOUNTING
SUPPORT DE SERRAGE

(30) Priorität: 16.10.2014 DE 102014115091
(43) Veröffentlichungstag der Anmeldung: 20.04.2016
(73) Patentinhaber: "DURABLE" HUNKE & JOCHHEIM GMBH & CO. KOMMANDITGESELLSCHAFT, 58636 Iserlohn (DE)
(72) Erfinder: Maier-Hunke, Horst-Werner, 58640 Iserlohn (DE)
(74) Vertreter: Beckord & Niedlich Patentanwälte PartG mbB

(56) Entgegenhaltungen:
- WO-A1-00/25640
- WO-A1-2014/058126
- CN-U- 203 731 041
- GB-A- 650 282
- GB-A- 2 298 569
- US-A- 3 328 023
- US-A1- 2005 284 995
- US-A1- 2010 207 003

## Beschreibung

Die Erfindung betrifft eine Klemmhalterung zur Befestigung eines Objekts, vorzugsweise einer Tischleuchte, insbesondere an einer Tischplatte, sowie eine Tischleuchte mit einer solchen Klemmhalterung.

Bei der Befestigung von Objekten, wie zum Beispiel Lampenfüßen oder Füßen von Haltearmen für Büro- oder Werkstatteinrichtungen an feststehenden Basiselementen, wie zum Beispiel Tischen, tritt häufig das Problem auf, dass die Abmessungen der verwendeten Halterung und des Tisches, an dem die Halterung montiert werden soll, nicht zueinander passen.

Eine gewisse Variabilität ist bei einfachen Halterungen gegeben, die nach Art von Klemmzwingen mit einem U-förmigen Klemmteil aufgebaut sind, wobei sich von einem ersten U-Schenkel des Klemmteils aus ein Klemmbolzen in Richtung des zweiten U-Schenkels erstreckt, wobei der Klemmbolzen am ersten U-Schenkel verstellbar gelagert ist. Um die Halterung beispielsweise an einer Tischplatte zu befestigen, wird diese zwischen dem ersten U-Schenkel und dem Ende des Klemmbolzens festgeklemmt. Ein Beispiel hierfür wird in der US 2011/0207003 A1 beschrieben.

Eine Möglichkeit, die Variabilität einer Halterung zu verbessern, ist in DE 730 276 beschrieben. Dort umfasst die Halterung zwei Winkelelemente mit Rückenschenkeln verschiedener Größe, von denen das Winkelelement mit dem längeren Rückenschenkel an seinem Rückenschenkel ein Langloch aufweist und das Winkelelement mit dem kleineren Rückenschenkel an seinem Rückenschenkel ein Durchgangsloch für eine Befestigungsschraube aufweist, mit der die beiden Winkelelemente miteinander verbunden sind. Die Distanz der beiden Klemmschenkel voneinander lässt sich durch eine Veränderung der Position der Befestigungsschraube in dem Langloch variieren. Allerdings bedingt diese stufenlose Variationsmöglichkeit auch die Gefahr einer Verschiebung der relativen Position der beiden Winkelelemente durch äußere Kräfte im Laufe der Zeit, wenn die Halterung am Tisch montiert ist. Insbesondere bei teuren Objekten, die von der Halterung in Position gehalten werden, beispielsweise edlen Schreibtischleuchten oder Monitoren, können ein Lösen der Halterung und ein dadurch verursachter Sturz des Objekts zu einem größeren Schaden führen.

In der DE 92 04 550 U1 und der DE 91 13 012 U1 wird jeweils eine Klemmhalterung mit einem ersten Winkelelement mit Langlöchern in seinem Rückenschenkel und mit einem zweiten Winkelelement mit einem kurz dimensionierten Rückenschenkel und einem länger dimensionierten Klemmschenkel beschrieben. Bei dieser Anordnung sind der kurzdimensionierte Rückenschenkel und der lang dimensionierte Klemmschenkel des zweiten Winkelelements mit funktionsgleichen Gewindebohrungen versehen, in die jeweils Kopfschrauben für die Langloch-Winkelverbindung zwischen dem ersten Winkelelement und dem zweiten Winkelelement einschraubbar sind, so dass wahlweise entweder der Rückenschenkel oder der Klemmschenkel des zweiten Winkelelements als derjenige Rückenschenkel verwendet werden kann, der an dem Rückenschenkel des ersten Winkelelements anliegt. Nachteilig bezüglich einer dauerhaften Festigkeit der Halterung ist auch bei dieser Anordnung die Verwendung von Langlöchern, welche eine Verschiebung der beiden Winkelelemente insbesondere in Längsrichtung relativ zueinander wie in der DE 730 276 nicht sicher ausschließt. Auch in der CN 203 731 041 U wird die Verbindung durch eine Klemmschraube in einem Langloch realisiert, wobei hier zur verbesserten Sicherung die gegeneinandergedrückten Seiten der Rückenschenkel Riffelungen aufweisen.

Ähnliches gilt auch für die Konstruktion gemäß der DE 94 02 835 U1. Dort erfolgt die Kopplung der Rückenschenkel der Winkelelemente mithilfe einer Schwalbenschwanzführung, wobei zur Arretierung Madenschrauben verwendet werden. Sobald sich diese aufgrund von Erschütterungen oder dergleichen nur geringfügig lösen oder durch Abnutzung die Klemmwirkung reduziert ist, kann es zu einer unbeabsichtigten Verschiebung in Längsrichtung der Schwalbenschwanzführung und somit zu einem Lösen der Halterung kommen.

Die WO 00/25640 A1 zeigt ein entsprechendes System zur Konstruktion einer Klemmhalterung mithilfe von zwei Winkelelementen, bei dem die Rückenschenkel der Winkelelemente über eine einzelne Schraube untereinander verbunden werden. Daher können die Winkelschenkel gegeneinander verdreht werden, was bei der Montage zu einer Verkantung führen kann. Eine andere Möglichkeit die Halterung zu verbessern ist in GB2298569 beschrieben.

Es ist folglich eine Aufgabe der vorliegenden Erfindung, eine Halterung mit einer hohen Flexibilität und gleichzeitig einer optimalen Dauerhaftigkeit und Verlässlichkeit, was die Fixierung des zu haltenden Bauelements betrifft, zu entwickeln.

Diese Aufgabe wird durch eine Klemmhalterung gemäß Anspruch 1 gelöst.

Die erfindungsgemäße Klemmhalterung umfasst ein erstes Winkelteil und ein zweites Winkelteil. Die beiden Winkelteile stellen also jeweils eine Art abgewinkelten Klemmbügel dar. Als Objekt werden in diesem Zusammenhang beispielsweise Leuchten oder Tragelemente für Bürogeräte, wie zum Beispiel Leuchtenfüße bzw. Leuchtenarme, Halteelemente für Telefone, mobile oder stationäre Endgeräte, Monitore oder Ähnliches verstanden.

Das erste Winkelteil weist einen Klemmschenkel, an dem ein Kupplungselement für ein zu haltendes Objekt befestigt ist, und einen Rückenschenkel auf, welcher Befestigungselemente zur Montage eines Rückenschenkels des zweiten Winkelteils umfasst. Bei dem Kupplungselement handelt es sich vorzugsweise, wie später noch anhand von Beispielen erläutert wird, um einen Kupplungszapfen. Prinzipiell könnte es sich aber auch um ein anderes Kupplungselement handeln, beispielsweise eine Art sich nach oben erstreckender Zylinder, dessen Innenraum eine Kupplungszapfenaufnahme für einen Kupplungszapfen am Objekt bildet. Die Montage der beiden Rückenschenkel aneinander ist derart, dass im montierten Zustand sicher keine Verschiebung oder Verdrehung der beiden Rückenschenkel gegeneinander (mehr) möglich ist, insbesondere durch einen Formschluss (z.B. wie später erläutert durch Zusammenwirken der Aussparungen und/oder Befestigungssprünge, durch Schrauben, Bolzen oder dergleichen und hiermit zusammenwirkenden passigen Löchern etc.) in Längsrichtung der Rückenschenkel bzw. gegen eine Kraft bzw. Bewegung in Längsrichtung der Rückenschenkel, d. h. in eine Richtung, in die der Abstand zwischen dem Klemmschenkel des ersten Winkelteils und dem Klemmschenkel des zweiten Winkelteils verändert, insbesondere vergrößert, würde. Durch eine solche formschlüssige Sicherung gegen eine Bewegung in dieser Bewegungsrichtung kann sichergestellt werden, dass es selbst beim leichten Lösen von Schrauben, bei Abnutzung oder bei größeren äußeren Kräften aufgrund von Erschütterungen, zum Beispiel wenn jemand unbeabsichtigt gegen das mit der Klemmhalterung befestigte Objekt stößt, nicht zu einer Vergrößerung des Abstands der Klemmschenkel und dadurch bedingt zu einem Lösen der Halterung kommen kann.

Das zweite Winkelteil umfasst einen Klemmschenkel, an dem ein in Richtung des Klemmschenkels des ersten Winkelteils verstellbares Klemmelement montiert ist, und einen Rückenschenkel, welcher entsprechende Befestigungselemente zur Montage des Rückenschenkels des zweiten Winkelteils an dem Rückenschenkel des ersten Winkelteils aufweist, die derart ausgebildet sind, dass im fest montierten Zustand wie oben erwähnt keine Verschiebung oder Verdrehung der beiden Rückenschenkel der beiden Winkelteile gegeneinander möglich ist. Das verstellbare Klemmelement dient der kraftschlüssigen und reibschlüssigen Montage der Klemmhalterung an einem Basiselement, wie zum Beispiel einer Tischplatte. Bei der Montage der Klemmhalterung an dem Basiselement wird durch Anpressen des verstellbaren Klemmelements an das Basiselement ein Kraftschluss zwischen Klemmhalterung und Basiselement erzielt. Die Befestigungselemente an den beiden Rückenschenkeln sind zudem so ausgebildet und angeordnet, dass die Rückenschenkel aneinander wahlweise in einer ersten Position, in welcher die beiden Rückenschenkel bezogen auf ihre Erstreckungsrichtung von ihrem zugehörigen Klemmschenkel des betreffenden Winkelteils aus gesehen parallel zueinander orientiert sind, oder in einer zweiten Position, in welcher die beiden Rückenschenkel antiparallel zueinander orientiert sind, montierbar sind. Anders ausgedrückt, zeigen die Enden der Rückenschenkel der beiden Winkelteile bei einer parallelen Montage in dieselbe Richtung, nämlich bei bestimmungsgemäßer Montage der Klemmhalterung nach unten, und bei einer antiparallelen Montage in einander entgegengesetzte Richtungen, d. h. bei bestimmungsgemäßer Montage zeigt in diesem Fall das Ende des Rückenschenkels des zweiten, unteren, Winkelteils nach oben.

Weitere besonders vorteilhafte Ausgestaltungen und Weiterbildungen der Erfindung ergeben sich aus den abhängigen Ansprüchen sowie der nachfolgenden Beschreibung, wobei die Patentansprüche einer bestimmten Kategorie auch gemäß den abhängigen Ansprüchen einer anderen Kategorie weitergebildet sein können und wobei Merkmale verschiedener Ausführungsbeispiele zu neuen Ausführungsbeispielen kombiniert werden können.

In einer Ausgestaltung der erfindungsgemäßen Klemmhalterung sind das erste Winkelteil und das zweite Winkelteil als L-förmige Winkelteile, vorzugsweise rechtwinklig, ausgebildet. Eine solche Ausgestaltung entspricht der Geometrie der meisten Basiselemente, wie zum Beispiel Tischplatten, an denen die Klemmhalterung befestigt werden kann. Durch eine dem Verlauf der Anpressflächen der Basiselemente folgenden Ausrichtung der Klemmhalterung wird eine optimale Fixierung der Klemmhalterung an dem jeweiligen Basiselement ermöglicht.

In einer besonders praktikablen Variante der erfindungsgemäßen Klemmhalterung ist das Kupplungselement, insbesondere wenn es sich um einen Kupplungszapfen handelt, bevorzugt senkrecht zu dem Klemmschenkel des ersten Winkelteils orientiert; alternativ kann jedoch je nach Anwendungszweck auch eine andere Orientierung gewählt sein.

Das Kupplungselement, insbesondere der Kupplungszapfen, kann an seiner unteren, an den Klemmschenkel des ersten Winkelteils angrenzenden Stirnseite eine Gewindebohrung aufweisen, in die eine durch eine passende Bohrung im Klemmschenkel des ersten Winkelteils hindurchgesteckte Schraube eingeschraubt ist, um das Kupplungselement am Klemmschenkel zu befestigen.

Dieses Kupplungselement bzw. der Kupplungszapfen sind besonders bevorzugt so ausgebildet, dass es/er ein Rastelement aufweist. Ganz besonders bevorzugt kann es sich bei einem solchen Rastelement um eine Rastkerbe handeln. Dieses Rastelement bzw. die Rastkerbe ist so ausgebildet und angeordnet, dass es/sie mit einem Rastelement in dem entsprechenden Gegenkupplungsteil des zu kuppelnden Objekts zusammenwirkt. Ein solches Rastelement bzw. die zusammenwirkenden Rastelemente sollen dafür sorgen, dass ein Abkuppeln des Objekts vom Kupplungselement nur gegen einen (vorzugsweise kleinen) mechanischen Widerstand möglich ist, um das Objekt sicherer am Kupplungselement zu kuppeln. Das Kupplungselement und das Gegenkupplungsteil des zu kuppelnden Objekts können auch jeweils mehrere solcher Rastelemente aufweisen.

Bei einer besonders bevorzugten Variante, bei der das Kupplungselement als Kupplungszapfen ausgebildet ist, weist dieser Kupplungszapfen zumindest zwei Rastkerben auf, die an zwei sich gegenüberliegenden Seiten in einer Mantelfläche des Kupplungszapfens angeordnet sind. Im Übrigen ist dieser Kupplungszapfen bevorzugt zylindersymmetrisch ausgebildet. Diese Rastkerben können so angeordnet sein, dass der Benutzer beispielsweise eine Kupplungshülse oder dergleichen, welche auf den Kupplungszapfen aufgesteckt wird, in eine bestimmte Position drehen kann, in der die entsprechenden Rastelemente des Gegenkupplungsteils, welche in die Rastkerben eingreifen, nicht mehr in den Rastkerben eingerastet sind, sondern vor der zylindrischen Mantelfläche liegen. In dieser Position ist dann eine einfache Entkupplung möglich, wogegen in Positionen, in denen die Rastelemente der Kupplungshülse des Objekts in die Rastkerben eingreifen, keine Entkupplung möglich ist.

Bevorzugt ist das Klemmelement als Klemmstift mit einem zumindest in einem Teilbereich in Längsrichtung angeordneten Außengewinde und einem an einem stirnseitigen Ende befindlichen Druckelement ausgebildet und der Klemmschenkel des zweiten Winkelteils weist ein Gewindeloch auf. Alternative Ausgestaltungen des Klemmelements sind auch möglich, beispielsweise eine Exzenterklemmung.

Das Druckelement des Klemmstifts kann insbesondere als Druckplatte ausgebildet sein.

Zwischen Klemmstift und Klemmelement kann ferner ein Kugelgelenk angeordnet sein, welches eine Anpassung der Orientierung der Druckplatte an eine Orientierung eines Basiselements, zum Beispiel einer Tischplatte ermöglicht.

Besonders bevorzugt umfassen die Befestigungselemente, mit denen die beiden Rückenschenkel der beiden Winkelelemente aneinander befestigt sind, Aussparungen und/oder Befestigungsvorsprünge (wie z.B. Rastnasen oder dergleichen). Wichtig ist dabei, dass die Aussparungen und/oder Befestigungsvorsprünge so zusammenwirken, dass sie einen Formschluss in Längsrichtung der Rückenschenkel bilden, so dass auch bei einer externen Krafteinwirkung - zum Beispiel in Längsrichtung - eine Verschiebung der beiden Winkelteile der Klemmhalterung in Längsrichtung der Rückenschenkel nicht möglich ist.

Beispielsweise können zwei zusammenwirkende Befestigungselemente an einem der beiden Rückenschenkel als Schraubloch mit Innengewinde und an dem anderen der beiden Rückenschenkel als passend angeordnetes (rundes) Durchgangsloch, vorzugsweise Senkloch, für eine Befestigungsschraube ausgebildet sein, wobei die Befestigungsschraube, wenn sie in das an die Außenabmessungen, z. B. den Gewindedurchmesser und den Kopf, der Schraube angepasste Durchgangsloch des einen der beiden Rückenschenkel eingesteckt ist, als ein (lösbarer) Befestigungsvorsprung dieses Rückenschenkels dient. Werden die beiden Rückenschenkel mittels der Befestigungsschraube miteinander verbunden, besteht somit keine Gefahr einer Verschiebung der beiden Winkelelemente relativ zueinander, selbst wenn sich die Befestigungsschraube leicht lockern sollte, da die Befestigungsschraube zwischen den beiden Winkelelementen zusätzlich zu einem Reibschluss und eventuell einem Kraftschluss, da sie in einem runden Durchgangsloch steckt, auch einen Formschluss in Längsrichtung der Rückenschenkel bildet. Eine ähnliche Wirkung lässt sich auch durch einen oder mehrere Stifte bzw. Bolzen erreichen, die in passende Durchgangslöcher in den Rückenschenkeln gesteckt und dort vorzugsweise arretiert sind.

In einer besonders bevorzugten Ausgestaltung der erfindungsgemäßen Klemmhalterung weist der Rückenschenkel des ersten Winkelelements eine, vorzugsweise kreisförmige oder langlochartige, Aussparung auf und das zweite Winkelelement weist ebenfalls eine Aussparung auf. Diese können als Kabeldurchführung dienen, um ein Kabel, insbesondere ein Zuleitungskabel des zu haltenden Objekts, z. B. der Tischleuchte, durch die Klemmhalterung hindurch sicher um die Tischkante herum unter den Tisch zu führen.

Die Aussparung im zweiten Winkelelement weist vorzugsweise einen Schlitz auf, welcher in Längsrichtung durch den Rückenschenkel des zweiten Winkelelements bis in den Klemmschenkel des zweiten Winkelelements hinein verläuft. Sind die beiden Winkelelemente aneinander montiert, so bildet der Schlitz zusammen mit dem Rückenschenkel des ersten Winkelelements eine Führungsrinne.

Besonders bevorzugt ist die Anordnung so, dass das zweite Winkelelement auf der zum Basiselement, z. B. der Tischplatte, weisenden Innenseite des Rückenschenkels des ersten Winkelelements mit diesem verbunden ist und der Rückenschenkel des zweiten Winkelelements so dimensioniert und so relativ zum Rückenschenkel des ersten Winkelelements und der darin ausgebildeten Aussparung angeordnet ist, dass der Schlitz zumindest teilweise diese Aussparung überdeckt. Diese Konstruktion sorgt dafür, dass wenn die Klemmhalterung beispielsweise an eine dicke Tischplatte angeklemmt und so fixiert wird, dass der innere, zur Tischkante weisende Rückenschenkel dicht an der Tischkante anliegt, der Schlitz immer noch genügend Freiraum zur Durchführung eines Kabels bietet.

Mit Hilfe einer solchen Klemmhalterung können wie erwähnt beliebige Objekte, die ein entsprechendes Gegenkupplungselement aufweisen, am Tisch befestigt werden, beispielsweise Schwenkarme für Telefone, Displays oder dergleichen. Besonders bevorzugt wird eine solche Klemmhalterung aber zur Montage einer Tischleuchte bzw. Schreibtischleuchte verwendet, so dass die Erfindung auch eine entsprechende Tischleuchte mit einer solchen Klemmhalterung umfasst.

Die Erfindung wird im Folgenden unter Hinweis auf die beigefügten Figuren anhand eines Ausführungsbeispiels noch einmal näher erläutert. Dabei sind in den verschiedenen Figuren gleiche oder ähnliche Komponenten mit identischen Bezugsziffern versehen. Es zeigen:
Figur 1 eine perspektivische Ansicht einer Klemmhalterung gemäß einem Ausführungsbeispiel der Erfindung mit parallel zueinander angeordneten Winkelelementen,
Figur 2 eine Seitenansicht der in Figur 1 gezeigten Anordnung,
Figur 3 eine perspektivische Ansicht einer Klemmhalterung gemäß einem Ausführungsbeispiel der Erfindung mit antiparallel zueinander angeordneten Winkelelementen,
Figur 4 eine Seitenansicht der in Figur 3 gezeigten Anordnung,
Figur 5 eine schematische Darstellung einer mittels der Klemmhalterung an einer Tischplatte montierten Schreibtischleuchte.

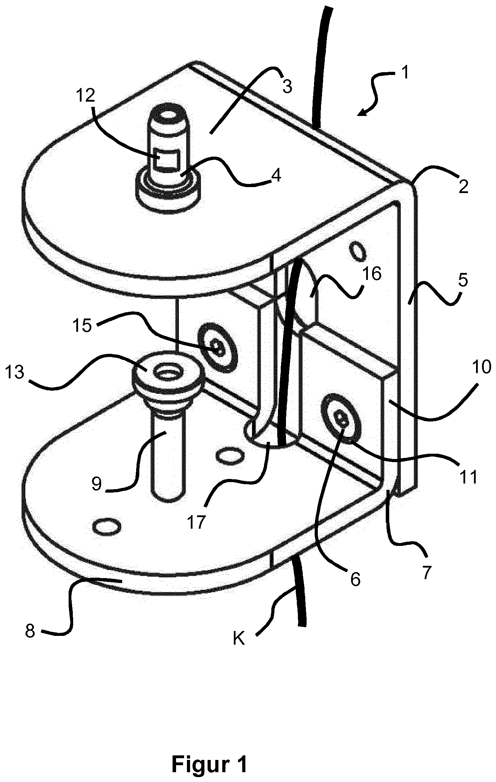

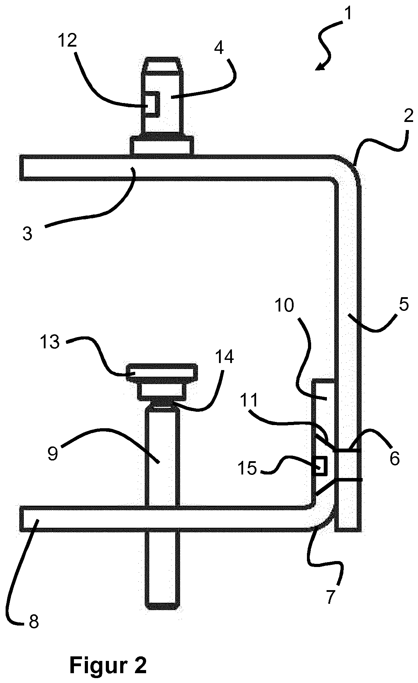

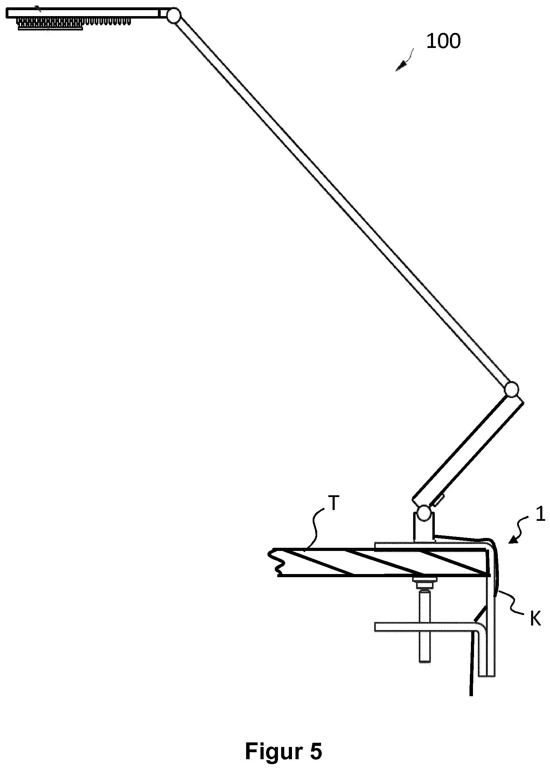

Die Figuren 1 und 2 zeigen eine Klemmhalterung 1, wie sie beispielsweise zur Befestigung einer Büroleuchte an einem Schreibtisch (siehe Figur 5) verwendet werden kann, gemäß einem Ausführungsbeispiel der Erfindung, wobei die Klemmhalterung 1 in der Figuren 1 und 2 derart in einer ersten Montagevariante so montiert ist, dass sie an Tischen mit besonders großer Dicke der Tischplatte befestigt werden kann.

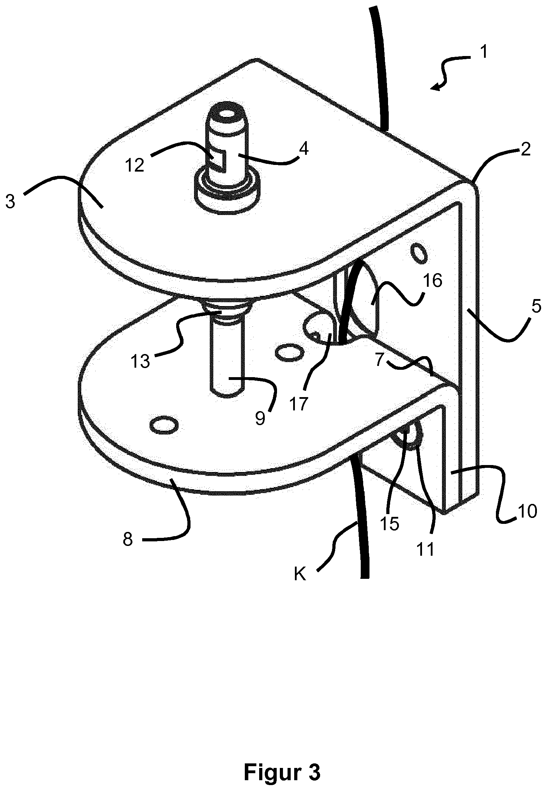

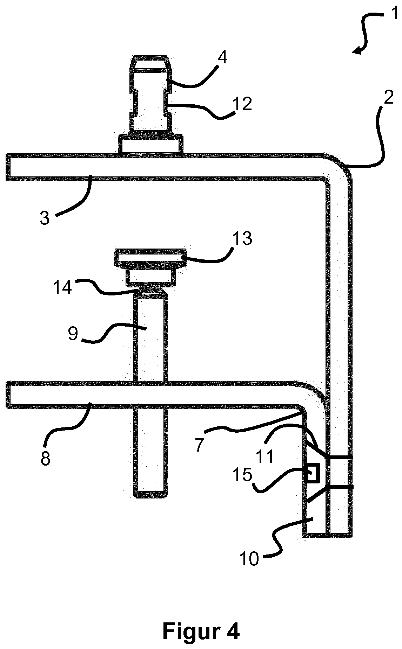

Die Figuren 3 und 4 zeigen die in den Figuren 1 und 2 veranschaulichte Klemmhalterung 1, wobei die Klemmhalterung 1 in den Figuren 3 und 4 derart in einer zweiten Montagevariante montiert ist, dass sie an Tischen mit einer dünnen Tischplatte befestigt werden kann.

Die Klemmhalterung 1 weist, wie in den Figuren 1 bis 4 gezeigt, ein oberes Winkelteil 2 und ein unteres Winkelteil 7 auf. Das obere Winkelteil 2 umfasst einen Klemmschenkel 3 sowie einen Rückenschenkel 5. Das untere Winkelteil 7 besitzt ebenfalls einen Klemmschenkel 8 und einen Rückenschenkel 10. In der gesamten Anmeldung sind übrigens die Richtungen "oben" und "unten" bzw. "darüber" und "darunter" auf eine Orientierung in bestimmungsgemäßer Gebrauchsanordnung bezogen. Insbesondere soll die Außenseite des Klemmschenkels 3 des oberen Winkelteils 2 als nach "oben" gewandt betrachtet werden und die Außenseite des Klemmschenkels 8 des unteren Winkelteils 7 als nach "unten" gewandt betrachtet werden. Die beiden Klemmschenkel 3, 8 dienen der Befestigung der Klemmhalterung 1 an einer Tischplatte (nicht gezeigt), wohingegen die beiden Rückenschenkel 5, 10 der Befestigung der beiden Winkelteile 2, 7 aneinander dienen. Wie in den Figuren 1 bis 4 zu erkennen ist, weist der Rückenschenkel 5 des oberen Winkelteils 2 in diesem Ausführungsbeispiel hierfür zwei Schraublöcher 6 mit Innengewinde (siehe Figuren 2 und 4) und der Rückenschenkel 10 des unteren Winkelteils 7 zwei runde Durchgangslöcher 11, hier Senklöcher 11 (siehe Figuren 2 und 4) für jeweils eine Befestigungsschraube 15 (siehe Figuren 1 bis 4) auf, wobei der Durchmesser der Durchgangslöcher 11 an den Gewindedurchmesser der Schraube angepasst ist und die Senkung an den Schraubenkopf. Mit diesen Befestigungselementen 6, 11, 15 werden die beiden Winkelteile 2, 7 in vertikaler Richtung, d. h. in Richtung des Verlaufs der Rückenschenkel 5, 10 formschlüssig fixiert, so dass auch bei einem leichten Lockern der Befestigungsschrauben 15 und/oder einer externen Krafteinwirkung auf die Rückenschenkel 5, 10 eine ungewollte Verschiebung der beiden Rückenschenkel relativ zueinander in Vertikalrichtung, d. h. in Längsrichtung der Rückenschenkel, nicht möglich ist. Auf diese Weise wird eine ungewollte Reduzierung der auf eine Tischplatte ausgeübten Klemmkraft der beiden Klemmschenkel 3, 8 und somit ein Lockern oder gar Herabstürzen des von der Klemmhalterung 1 gehaltenen Objekts, zum Beispiel einer Büroleuchte, vermieden.

Zudem weist der Rückenschenkel 5 des oberen Winkelteils 2 eine ringförmige Aussparung 16 zur Durchführung eines Kabels K in den Innenbereich der Klemmhalterung 1 auf. Korrespondierend hierzu weist das untere Winkelteil 7 einen Schlitz 17 in seinem Rückenschenkel 10 auf, der in vertikaler Richtung den gesamten Rückenschenkel 10 des unteren Winkelteils 7 durchläuft und über die Kante zwischen dem Rückenschenkel 10 und dem Klemmschenkel 8 des unteren Winkelteils 7 hinaus ein Stück weit in den Klemmschenkel 8 des unteren Winkelteils 7 hinein verläuft, so dass im montierten Zustand der Schlitz 17 zusammen mit dem Rückenschenkel 5 des oberen Winkelteils 2 für das Kabel K eine Führungsrinne sowie eine halbkreisförmige Durchführung zur Außenseite des unteren Winkelteils 7 der Klemmhalterung 1 ausbildet (siehe Figuren 1 und 3).

Wie in den Figuren 1 bis 4 zu sehen, ist an der Oberseite des Klemmschenkels 1 des oberen Winkelteils 2 ein Kupplungselement 4 in Form eines Kupplungszapfens 4 befestigt. Am Kupplungselement 4 ist untenseitig ein Kragen angeordnet. Dieser Kupplungszapfen 4 ist zylinderförmig ausgebildet, weist jedoch in seiner Mantelfläche an zwei gegenüberliegenden Seiten jeweils Rastkerben 12 auf, in welche Rastelemente, die in einer Kupplungshülse des daran zu kuppelnden Objekts - d. h. der Schreibtischleuchte 100 - angeordnet sind (nicht dargestellt), eingreifen können.

Die Kupplungshülse ist auf dem Kupplungszapfen 4 frei um die Längsachse des Verbindungsbolzens 10 drehbar, so dass entsprechend die Schreibtischleuchte 100 in eine beliebige Position geschwenkt werden kann. Die Rastelemente im Inneren der Kupplungshülse sind so ausgebildet, dass sie in den meisten Positionen in die Rastkerben 12 am Kupplungszapfen 4 eingreifen und lediglich in einer bestimmten Position nicht in den Rastkerben 12 rasten. In dieser Position kann dann der Benutzer relativ einfach die Leuchte 100 mit der Kupplungshülse von oben vom Kupplungszapfen 4 abziehen. Um ein einfaches Aufstecken der Kupplungshülse auf den Kupplungszapfen 4 zu erleichtern, weist der Kupplungszapfen 4 an seiner oberen Stirnseite bzw. an der umlaufenden Randkante der Stirnseite eine Fase 19 auf.

Zur Feineinstellung bzw. Anpassung der Halterung 1 an die Abmessungen einer Tischplatte, an der die Halterung 1 montiert werden soll, ist an dem Klemmschenkel 8 des unteren Winkelteils 7 ein in vertikaler Richtung, d. h. in Richtung der Dicke der Tischplatte verstellbares Klemmelement 9 angeordnet. Das Klemmelement 9 ist in dieser Ausführungsform als Klemmstift 9 (oder Klemmbolzen) mit einer Druckplatte 13 ausgeführt. Die Druckplatte 13 ist bezüglich des Klemmstifts 9 mit einem Kugelgelenk 14 gelagert. Der Klemmstift 9 ist bei dieser Ausführungsform an dem Klemmschenkel 8 des unteren Winkelteils 7 mit Hilfe eines Schraubgewindes (nicht gezeigt) in vertikaler Richtung verstellbar montiert. Hierfür besitzt der Klemmschenkel 8 des unteren Winkelteils 7 ein in vertikaler Richtung verlaufendes Innengewinde (nicht gezeigt) und der Klemmstift 9 an seiner Außenseite ein in Längsrichtung verlaufendes Außengewinde (nicht gezeigt). Zum Beispiel kann der gesamte Klemmstift 9 als Gewindestange ausgebildet sein. Mit Hilfe dieser Elemente kann die Position des Klemmstifts 9 in Vertikalrichtung an eine Dicke einer Tischplatte angepasst werden und die an der Oberseite des Klemmstifts 9 angeordnete Druckplatte 13 durch eine Schraubbewegung des Klemmstifts 9 an eine Tischplatte T angepresst werden. Dabei dient das Kugelgelenk 14 der Anpassung der Orientierung der Druckplatte 13 an die Orientierung der Fläche der Tischplatte T, an die die Druckplatte 13 angedrückt wird.

Wie in den Figuren 1 bis 4 zu erkennen ist, lässt sich das untere Winkelteil 7 in zwei verschiedenen Orientierungen, nämlich antiparallel zu dem oberen Winkelteil 2, wie es in den Figuren 1 und 2 gezeigt ist, und parallel zu dem oberen Winkelteil 2, wie es in den Figuren 3 und 4 gezeigt ist, an dem oberen Winkelteil 2 montieren. Auf diese Weise erweitert sich der Einsatzbereich der Klemmhalterung 1 auf Tischplatten mit sehr unterschiedlichen Tischplattendicken.

Wie in den Figuren 1 und 2 zu erkennen ist, ist bei einer antiparallelen Ausrichtung der beiden Winkelteile 2, 7 relativ zueinander eine größtmögliche Distanz zwischen dem Klemmschenkel 3 des oberen Winkelteils 2 und dem Klemmschenkel 8 des unteren Winkelteils 7 gegeben. In dieser Montageposition eignet sich die Klemmhalterung 1 besonders für die Befestigung an Tischen mit großen Tischplattendicken.

Bei der in den Figuren 3 und 4 dargestellten parallelen Ausrichtung der beiden Winkelteile 2, 7 relativ zueinander wird eine im Vergleich zu der Anordnung in den Figuren 1 und 2 geringere Distanz zwischen den Klemmschenkeln 3, 8 der beiden Winkelteile 2, 7 erreicht. Dabei werden zur Befestigung der beiden Winkelteile 2, 7 aneinander dieselben Befestigungselemente 6, 11, 15 an derselben Position verwendet wie bei der in Figur 1 und 2 gezeigten Montageart. In der in den Figuren 3 und 4 gezeigten Montageposition eignet sich die Klemmhalterung 1 besonders für die Befestigung an Tischen mit geringeren Tischplattendicken.

Figur 5 zeigt schließlich einen Einsatz der Klemmhalterung 1 zur Befestigung einer Schreibtischleuchte 100 an einer (relativ dünnen) Tischplatte T. Das durch die Klemmhalterung 1 hindurchgeführte Kabel K kann dann z. B. an die Leuchte 100 angeschlossen sein.

Es wird abschließend noch einmal darauf hingewiesen, dass es sich bei der vorhergehend detailliert beschriebenen Vorrichtung lediglich um ein Ausführungsbeispiel handelt, welches vom Fachmann in verschiedenster Weise modifiziert werden kann, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können.

### Bezugszeichenliste

1 Klemmhalterung
2 Winkelteil
3 Klemmschenkel
4 Kupplungselement / Kupplungszapfen
5 Rückenschenkel
6 Befestigungselement / Schraubloch
7 Winkelteil
8 Klemmschenkel
9 Klemmelement / Klemmstift
10 Rückenschenkel
11 Befestigungselement / Durchgangsloch / Senkloch
12 Kerbe
13 Druckelement
14 Kugelgelenk
15 Befestigungsschraube
16 Aussparung
17 Aussparung / Schlitz
18 Kragen
19 Fase
100 Objekt / Tischleuchte
K Kabel
T Tischplatte

## Patentansprüche

1. Klemmhalterung (1) für ein Objekt (100), vorzugsweise eine Tischleuchte (100), aufweisend,
- ein erstes Winkelteil (2)
- mit einem Klemmschenkel (3), an dem ein Kupplungselement (4), vorzugsweise ein Kupplungszapfen (4), für ein zu haltendes Objekt (100) befestigt ist,
- mit einem Rückenschenkel (5), welcher Befestigungselemente (6) zur Montage eines Rückenschenkels (10) eines zweiten Winkelteils (7) aufweist, so dass im montierten Zustand keine Verschiebung oder Verdrehung der beiden Rückenschenkel (5, 10) gegeneinander möglich ist,
- ein zweites Winkelteil (7)
- mit einem Klemmschenkel (8), an dem ein in Richtung des Klemmschenkels (3) des ersten Winkelteils (2) verstellbares Klemmelement (9) montiert ist,
- mit einem Rückenschenkel (10), welcher Befestigungselemente (11) zur Montage des Rückenschenkels (10) des zweiten Winkelteils (7) an dem Rückenschenkel (5) des ersten Winkelteils (2) aufweist, so dass im montierten Zustand keine Verschiebung oder Verdrehung der beiden Rückenschenkel (5, 10) der beiden Winkelteile (2, 7) gegeneinander möglich ist,
wobei die Befestigungselemente (6, 11) an den beiden Rückenschenkeln (5, 10) so ausgebildet und angeordnet sind, dass die Rückenschenkel (5, 10) aneinander wahlweise in einer ersten Position, in welcher die beiden Rückenschenkel (5, 10) bezogen auf ihre Erstreckungsrichtung von ihrem zugehörigen Klemmschenkel (3, 8) aus gesehen parallel zueinander orientiert sind, oder in einer zweiten Position, in welcher die beiden Rückenschenkel (5, 10) antiparallel zueinander orientiert sind, montierbar sind,
**dadurch gekennzeichnet, dass** der Rückenschenkel (5) des ersten Winkelelements (2) eine Aussparung (16) aufweist und das zweite Winkelelement (7) eine Aussparung (17) aufweist, die als Kabeldurchführung dienen können.

2. Klemmhalterung (1) nach Anspruch 1, wobei das erste Winkelteil (2) und das zweite Winkelteil (7) als L-förmige Winkelteile (1, 2), vorzugsweise rechtwinklig, ausgebildet sind.

3. Klemmhalterung (1) nach Anspruch 1 oder 2, wobei das Kupplungselement (4) für ein zu haltendes Objekt (T) rechtwinklig zu dem Klemmschenkel (3) des ersten Winkelteils (2) orientiert ist.

4. Klemmhalterung (1) nach einem der vorstehenden Ansprüche, wobei das Kupplungselement (4), vorzugsweise der Kupplungszapfen (4), ein Rastelement (12), bevorzugt eine Rastkerbe (12) aufweist.

5. Klemmhalterung (1) nach Anspruch 4, wobei zwei Rastkerben (12) an zwei sich gegenüberliegenden Seiten in einer Mantelfläche des Kupplungszapfens (4) angeordnet sind.

6. Klemmhalterung (1) nach einem der vorstehenden Ansprüche, wobei das Klemmelement (9) als Klemmstift (9) mit einem zumindest mit einem Teilbereich in Längsrichtung angeordneten Außengewinde und einem an seinem stirnseitigen Ende befindlichen Druckelement (13) ausgebildet ist und der Klemmschenkel (8) des zweiten Winkelteils (7) ein Gewindeloch aufweist.

7. Klemmhalterung (1) nach Anspruch 6, wobei das Druckelement (13) des Klemmstifts (9) als Druckplatte ausgebildet ist.

8. Klemmhalterung (1) nach einem der vorstehenden Ansprüche, wobei zwischen Klemmstift (9) und Druckelement (13) ein Kugelgelenk (14) angeordnet ist.

9. Klemmhalterung (1) nach einem der vorstehenden Ansprüche, wobei die Befestigungselemente (6, 11) Aussparungen und/oder Befestigungsvorsprünge umfassen.

10. Klemmhalterung (1) nach einem der vorstehenden Ansprüche, wobei die Befestigungselemente (6, 11) an einem der beiden Rückenschenkel (5, 10) ein Schraubloch (6) und an dem anderen der beiden Rückenschenkel (5, 10) ein Durchgangsloch (11), vorzugsweise Senkloch (11), für eine Befestigungsschraube (15) aufweisen.

11. Klemmhalterung (1) nach einem der vorstehenden Ansprüche, wobei die Aussparung (16) des Rückenschenkels (5) des ersten Winkelelements (2) kreisförmig oder langlochartig ist.

12. Klemmhalterung (1) nach einem der vorstehenden Ansprüche, wobei die Aussparung (17) im zweiten Winkelelement (7) einen Schlitz (17) aufweist, welcher in Längsrichtung durch den Rückenschenkel (10) des zweiten Winkelelements (7) bis in den Klemmschenkel (8) des zweiten Winkelelements (7) hinein verläuft.

13. Tischleuchte (100) mit einer Klemmhalterung (1) nach einem der vorhergehenden Ansprüche.

14. Verwendung einer Klemmhalterung (1) nach einem der Ansprüche 1 bis 12, zur Befestigung eines Objekts (100), vorzugsweise einer Tischleuchte (100), an einer Tischplatte (T) .

## Claims

1. A clamping holder (1) for an object (100), preferably a table lamp (100), having
- a first angled part (2)
- with a clamping arm (3) to which a coupling element (4), preferably a coupling pin (4), for an object (100) to be held is fastened,
- with a rear arm (5) which has fastening elements (6) for mounting a rear arm (10) of a second angled part (7) such that no displacement or rotation of the two rear arms (5, 10) relative to each other is possible when in the mounted state,
- a second angled part (7)
- with a clamping arm (8) on which a clamping element (9) is mounted which can be adjusted in the direction of the clamping arm (3) of the first angled part (2),
- with a rear arm (10) which has fastening elements (11) for mounting the rear arm (10) of the second angled part (7) on the rear arm (5) of the first angled part (2) such that no displacement or rotation of the two rear arms (5, 10) of the two angled parts (2, 7) relative to each other is possible when in the mounted state,
wherein the fastening elements (6, 11) on the two rear arms (5, 10) being designed and arranged such that the rear arms (5, 10) can be mounted on each other either in a first position in which the two rear arms (5, 10) are oriented parallel to each other in relation to the extension direction thereof, as seen from the associated clamping arm (3, 8) thereof, or in a second position in which the two rear sides (5, 10) are oriented antiparallel to each other,
**characterised in that** the rear arm (5) of the first angled element (2) has a cut-out (16) and the second angled element (7) has a cut-out (17), which can act as a cable feedthrough.

2. The clamping holder (1) according to claim 1, wherein the first angled part (2) and the second angled part (7) are in the form of L-shaped, preferably right-angled angled parts (1, 2).

3. The clamping holder (1) according to claim 1 or 2, wherein the coupling element (4) for an object (T) to be held is oriented at right angles to the clamping arm (3) of the first angled part (2).

4. The clamping holder (1) according to any one of the preceding claims, wherein the coupling element (4), preferably the coupling pin (4), has a latching element (12), preferably a latching notch (12).

5. The clamping holder (1) according to claim 4, wherein two latching notches (12) are arranged on two mutually opposing sides in a lateral face of the coupling bolt (4) .

6. The clamping holder (1) according to any one of the preceding claims, wherein the clamping element (9) is in the form of a clamping pin (9) which has an external thread, at least a portion of which is arranged in the longitudinal direction, and a pressure element (13), which is situated at the end face of the clamping pin, and the clamping side (8) of the second angled part (7) has a threaded hole.

7. The clamping holder (1) according to claim 6, wherein the pressure element (13) of the clamping pin (9) is in the form of a pressure plate.

8. The clamping holder (1) according to any one of the preceding claims, wherein a ball joint (14) is arranged between the clamping pin (9) and the pressure element (13).

9. The clamping holder (1) according to any one of the preceding claims, wherein the fastening elements (6, 11) comprise cut-outs and/or fastening protrusions.

10. The clamping holder (1) according to any one of the preceding claims, wherein the fastening elements (6, 11) have a screw hole (6) in one of the two rear sides (5, 10) and a through-hole (11), preferably a countersunk hole (11), in the other of the two rear sides (5, 10), for a fastening screw (15).

11. The clamping holder (1) according to any one of the preceding claims, wherein the cut-out (16) in the rear side (5) of the first angled element (2) is circular or slot-shaped.

12. The clamping holder (1) according to any one of the preceding claims, wherein the cut-out (17) in the second angled element (7) has a slot (17) which runs in the longitudinal direction through the rear side (10) of the second angled element (7) into the clamping side (8) of the second angled element (7).

13. A table lamp (100) having a clamping holder (1) according to any one of the preceding claims.

14. The use of a clamping holder (1) according to any one of claims 1 to 12 for fastening an object (100), preferably a table lamp (100), to a tabletop (T).

## Revendications

1. Fixation de serrage (1) pour un objet (100), de préférence une lampe de table (100), comportant,
- une première pièce en équerre (2)
- avec une branche de serrage (3), sur laquelle un élément de couplage (4), de préférence un pivot d'accouplement (4), est fixé pour un objet (100) à maintenir,
- avec une branche arrière (6), laquelle comporte des éléments de fixation (6) pour le montage d'une branche arrière (10) d'une deuxième pièce en équerre (7), de telle manière qu'à l'état monté aucun déplacement ou aucune rotation des deux branches arrière (5,10) l'une contre l'autre n'est possible,
- une deuxième pièce en équerre (7)
- avec une branche de serrage (8) sur laquelle est monté un élément de serrage (9) réglable en direction de la branche de serrage (3) de la première pièce en équerre (2),
- avec une branche arrière (10), laquelle comporte des éléments de fixation (11) pour le montage de la branche arrière (10) de la deuxième pièce en équerre (7) sur la branche arrière (5) de la première pièce en équerre (2) de sorte qu'à l'état monté aucun déplacement ou aucune rotation des deux branches arrière (5,10) des deux pièces en équerre (5,10) l'une contre l'autre n'est possible,
les éléments de fixation (6,11) sur les branches arrière (5,10) étant constitués et disposés de telle manière que les branches arrière (5,10) peuvent être montées sélectivement l'une à côté de l'autre dans une première position dans laquelle les deux branches arrière (5,10) sont orientées parallèles l'une par rapport à l'autre en référence à leur direction d'extension vue de leur branche de serrage (3,8) correspondante, ou dans une deuxième position dans laquelle les deux branches arrière (5,10) dont orientées antiparallèles l'une par rapport à l'autre,
**caractérisée en ce que** la branche arrière (5) de la première pièce en équerre (2) comporte un évidement (16) et la deuxième pièce en équerre (7) comporte un évidement (17) qui peuvent servir au passage de câble.

2. Fixation de serrage (1) selon la revendication 1, la première pièce en équerre (2) et la deuxième pièce en équerre (7) étant constituées comme des pièces en équerre en forme de L (1,2), de préférence à angle droit.

3. Fixation de serrage (1) selon la revendication 1 ou 2, l'élément d'accouplement (4) pour un objet à maintenir (T) étant orienté à angle droit par rapport à la branche de serrage (3) de la première pièce en équerre (2).

4. Fixation de serrage (1) selon l'une quelconque des revendications précédentes, l'élément d'accouplement (4), de préférence le pivot d'accouplement (4), comportant un élément d'encliquetage (12), de préférence une encoche d'encliquetage (12).

5. Fixation de serrage (1) selon la revendication 4, deux encoches d'encliquetage (12) étant disposées sur deux faces opposées dans une surface d'enveloppe du pivot d'accouplement (4).

6. Fixation de serrage (1) selon l'une quelconque des revendications précédentes, l'élément de serrage (9) étant constitué comme tige de serrage (9) avec un filetage extérieur disposé au moins avec une partie de zone dans le sens longitudinal et un élément de pression (13) se trouvant sur son extrémité frontale et la branche de serrage (8) de la deuxième pièce en équerre (7) comportant un trou taraudé.

7. Fixation de serrage (1) selon la revendication 6, l'élément de pression (13) de la tige de serrage (9) étant constitué sous la forme d'une plaque de pression.

8. Fixation de serrage (1) selon l'une quelconque des revendications précédentes, un joint à rotule (14) étant disposé entre la tige de serrage (9) et l'élément de pression (13).

9. Fixation de serrage (1) selon l'une quelconque des revendications précédentes, les éléments de fixation (6,11) comprenant des évidements et/ou des saillies de fixation.

10. Fixation de serrage (1) selon l'une quelconque des revendications précédentes, les éléments de fixation (6,11) comportant sur une des deux branches arrière (5,10) un trou pour vis (6) et sur l'autre des deux branches arrière (5,10) un trou traversant (11), de préférence un trou fraisé (11), pour une vis de fixation (15).

11. Fixation de serrage (1) selon l'une quelconque des revendications précédentes, l'évidement (16) de la branche arrière (5) de la première pièce en équerre (2) étant de forme circulaire ou oblong.

12. Fixation de serrage (1) selon l'une quelconque des revendications précédentes, l'évidement (17) dans la deuxième pièce en équerre (7) comportant une fente (17), laquelle passe dans la direction longitudinale à travers la branche arrière (10) de la deuxième pièce en équerre (7) jusque dans la branche de serrage (8) de la deuxième pièce en équerre (7).

13. Lampe de table (100) avec une fixation de serrage (1) selon l'une quelconque des revendications précédentes.

14. Utilisation d'une fixation de serrage (1) selon l'une quelconque des revendications 1 à 12, pour la fixation d'un objet (100), de préférence d'une lampe de table (100), sur un plateau de table (T).
